Europäisches Patentamt

(19) European Patent Office

Office européen des brevets

(11) Numéro de publication : **0 028 966**
**B1**

(12) **FASCICULE DE BREVET EUROPÉEN**

(45) Date de publication du fascicule du brevet :
04.07.84

(21) Numéro de dépôt : **80401543.6**

(22) Date de dépôt : **30.10.80**

(51) Int. Cl.³ : **F 41 G  7/22, F 42 B 15/02,
B 64 C 15/14**

(54) **Procédé de pilotage et de guidage de projectiles en phase terminale de vol.**

(30) Priorité : **09.11.79 FR 7927712**

(43) Date de publication de la demande :
**20.05.81 Bulletin 81/20**

(45) Mention de la délivrance du brevet :
**04.07.84 Bulletin 84/27**

(84) Etats contractants désignés :
**AT BE CH DE FR GB IT LI LU NL SE**

(56) Documents cités :
**FR-A- 2 231 947
FR-A- 2 346 673
FR-A- 2 364 164
FR-A- 2 367 659
US-A-   902 615
US-A- 3 072 055
US-A- 3 273 825
US-A- 3 455 243
US-A- 3 621 784
US-A- 3 843 076
US-A- 3 860 199**

(73) Titulaire : **BRANDT ARMEMENTS Société anonyme
de nationalité française
52, avenue des Champs Elysées
F-75008 Paris (FR)**

(72) Inventeur : **Metz, Pierre
"THOMSON-CSF" SCPI 173, bld Haussmann
F-75360 Paris Cedex 08 (FR)**

(74) Mandataire : **Letellier, Bernard et al
THOMSON-CSF SCPI 173, Bld Haussmann
F-75379 Paris Cedex 08 (FR)**

## Description

L'invention concerne un procédé de pilotage et de guidage de projectile en phase terminale. Elle concerne également les projectiles comportant les moyens de mise en œuvre de ces procédés, notamment les projectiles empennés tirés à partir d'un canon avec un pointage de l'arme en direction du point futur de collision et dont la trajectoire est suffisamment tendue pour être assimilée à une ligne droite.

Pour augmenter les chances de coup au but, contre une cible animée d'une composante de vitesse dirigée perpendiculairement à la trajectoire de tir d'un projectile, il est nécessaire, après avoir tiré ce projectile en direction du point futur de collision avec la cible, d'appliquer au projectile, durant la portion terminale de la trajectoire, une correction latérale dépendante d'un écart de trajectoire détectée par le projectile.

On connaît déjà, notamment par le brevet FR-A-2 231 947 un projectile en autorotation dans lequel est disposé un ensemble de moyens destinés à la détection d'une cible et à la correction automatique de la trajectoire terminale du projectile. Ce document divulgue un projectile qui comporte un détecteur radar ayant une antenne fixe dont l'axe de rayonnement est décalé angulairement de l'axe longitudinal du projectile et un propulseur de correction muni d'une pluralité de tuyères latérales, disposées en couronne et également espacées. Chacune de ces tuyères inclut une électrovanne d'ouverture et ces électrovannes sont actionnées séquentiellement, sur plusieurs rotations du projectile et à une fréquence proportionnelle à la vitesse d'autorotation du projectile. L'instant d'ignition du propulseur de correction et d'ouverture d'une première électrovanne est conditionnée par un signal fourni par le détecteur radar lorsque la direction de l'antenne intercepte une cible. Il en résulte une poussée latérale appliquée au projectile de manière à diriger celui-ci vers la cible.

On connaît, également, par le brevet US-A-3, 843, 076 un système de correction de la trajectoire terminale d'un projectile en autorotation. Ce document divulgue un projectile qui comporte un détecteur optique ayant une pluralité de cellules photodétectrices arrangées en anneau dans un plan et un micropropulseur qui fournit une impulsion de poussée latérale de grandeur prédéterminée. La détection de l'image optique de la cible par l'une des cellules photodétectrices provoque l'ignition du propulseur dans la direction de la cible afin de diriger le projectile sur la cible.

Les projectiles connus présentent l'inconvénient majeur qu'ils ne permettent pas de faire impact sur une cible animée d'une vitesse de déplacement non négligeable. Le but de la présente invention est de remédier à l'inconvénient précité des projectiles de l'état de la technique.

Pour atteindre ce but, l'invention propose un procédé de pilotage et de guidage d'un projectile en phase terminale vers une cible, ce projectile en autorotation comportant un barillet d'impulseurs munis de tuyères latérales également espacées à la périphérie du corps et un autodirecteur muni d'un senseur optique situé dans l'ogive, selon le procédé de l'invention le projectile ayant été tiré en direction du point futur de collision avec la cible, on effectue les opérations suivantes :

a) mesure de la période d'autorotation du projectile autour de son axe longitudinal ;

b) détection de la direction de l'image optique de la cible au cours des rotations successives du projectile ;

c) mesure de la coordonnée polaire de cette image optique de la cible au moins une fois durant une période de rotation du projectile ;

d) calcul de la grandeur de la vitesse de variation $(\rho_1 - \rho_2)/T$ des mesures successives (des coordonnées polaires) pendant une période de rotation du projectile, cette grandeur représentant la vitesse instantanée de rotation de la ligne de visée ;

e) comparaison de cette grandeur calculée à une valeur de seuil prédéterminée ;

f) mesure de l'instant $t_d$, auquel la grandeur calculée dépasse cette valeur de seuil, pour fournir un signal d'ignition du barillet d'impulseurs ; et

g) ignition d'un premier impulseur, puis séquentiellement, du second, du troisième et enfin du $n^{ième}$ impulseur en relation avec la période d'autorotation du projectile afin de décharger totalement le barillet d'impulseurs au cours d'une seule rotation du projectile.

L'invention sera mieux comprise à l'aide des explications qui vont suivre et des figures jointes parmi lesquelles :

Les figures 1 et 2 illustrent schématiquement selon une coupe longitudinale et transversale un projectile comportant notamment des moyens pyrotechniques de mise en œuvre du procédé conforme à l'invention.

Les figures 3 à 6 sont des schémas explicatifs.

Les figures 7, 8 et 9 illustrent notamment des moyens optroniques coopérant avec les moyens pyrotechniques pour la mise en œuvre du procédé selon l'invention.

Pour plus de clarté, les mêmes éléments portent les mêmes références dans toutes les figures.

Pour augmenter les chances de coup au but il est donc nécessaire comme cela a été dit précédemment de procéder à une correction de la trajectoire du projectile en fin de course de celui-ci. Le projectile doit subir un facteur de charge dans une direction détectée par un autodirecteur de façon à contracter la distance de passage.

Conformément à l'invention on fait appel pour cela à un système de pilotage constitué par un barillet d'impulseurs pyrotechniques à poudre à tuyère axée perpendiculairement à l'axe du projectile. Dans ces conditions l'impulsion totale nécessaire pour réaliser ce facteur de charge est divisée en (n) impulsions élémentaires (n étant un nombre entier supérieur à 1). Dans un exemple de réalisation non limitatif un bon compromis des paramètres concernés conduit à choisir n = 8.

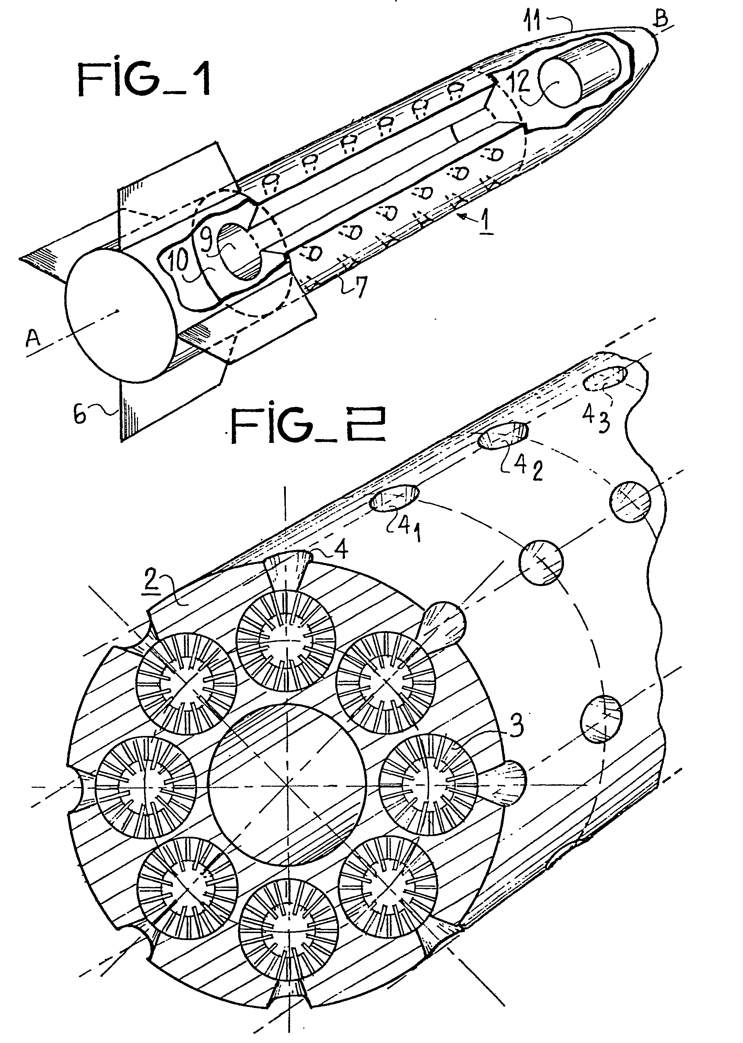

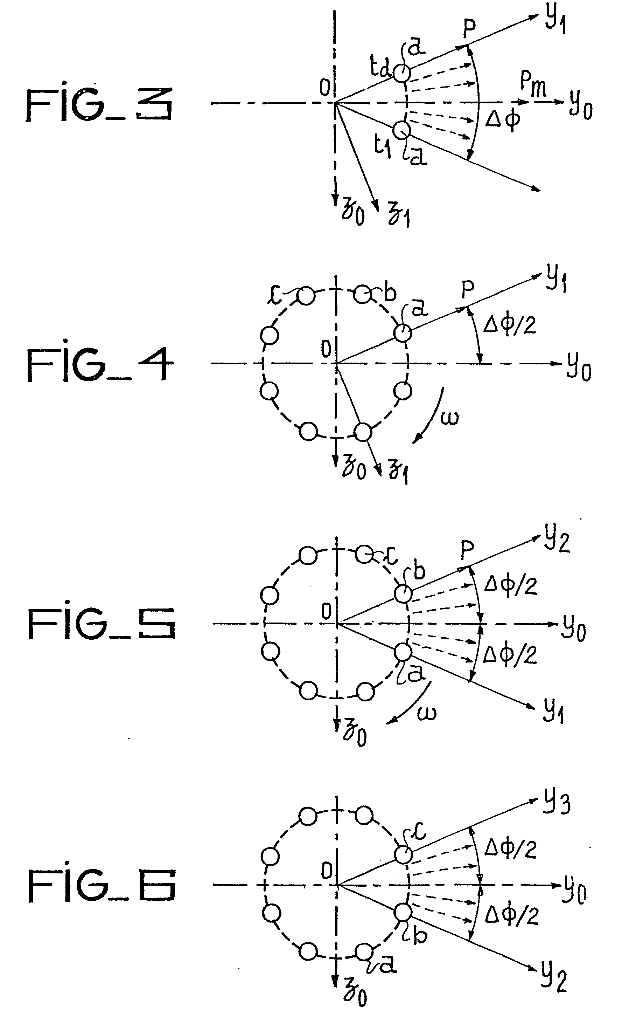

Les figures 1 et 2 illustrent schématiquement un projectile 1 équipé conformément à l'invention d'un barillet 2 de (n) propulseurs à poudre 3, à tuyère 4 orientée perpendiculairement à l'axe AB du projectile 1. Ces tuyères sont situées de préférence au centre de gravité du projectile où entre ce dernier et l'ogive 11 sans toutefois trop s'en écarter chaque impulseur peut comporter une pluralité d'éléments de tuyère $4_1$, $4_2$, $4_3$ ... $4_4$ disposés longitudinalement le long de la génératrice de ces impulseurs (figure 2). Un tel projectile 1 comprend essentiellement un empennage 6 fixé au corps 7 du projectile 1. Ce corps comprend un compartiment 10 destiné à recevoir le barillet 2 des (n) impulseurs situé autour d'un compartiment 9 destiné à la partie militaire. Le corps 7 se termine par une ogive 11 contenant un certain nombre d'équipements dont notamment un autodirecteur 12.

Le procédé conforme à l'invention comporte les principales étapes suivantes :

a) détection de la vitesse angulaire de la droite de relèvement projectile cible ;

b) mesure de l'instant $t_d$ de dépassement de cette vitesse par rapport à un seuil $S_1$ prédéterminé ;

c) déclenchement de la combustion d'un premier impulseur (a) à partir de cet instant $t_d$, ce premier impulseur (a) occupant une position donnée par rapport à un système d'axes de référence absolu lié à la cible, telle que la poussée moyenne latérale P de cet impulseur soit dirigée selon une direction assurant la correction recherchée par rapport à ce système d'axes de référence ; cette valeur moyenne P étant la résultante des poussées élémentaires correspondant aux tuyères $4_1$, $4_2$ ... $4_4$ ;

d) rotation des impulseurs, notamment de ce premier impulseur (a) avec celle du projectile à la même vitesse ω que lui telle qu'à la fin de la combustion l'axe de l'impulseur (a) ait décrit un angle $\Delta\varnothing$ ;

f) déclenchement successif du deuxième, du troisième, du quatrième, du $n^{ième}$ impulseur dès que l'axe de la poussée P de chacun occupe, par rapport au système d'axes de référence, la position qu'occupait l'axe de la poussée du précédent à l'instant $t_d$ du début de sa combustion.

La figure 3 illustre schématiquement le fonctionnement d'un impulseur, par exemple le premier impulseur (a) depuis l'instant du déclenchement de sa combustion à l'instant $t_d$ jusqu'à la fin de celle-ci au temps $t_1$. Pendant ce temps $t_1 - t_d$, le projectile qui est animé d'une vitesse en roulis ω a parcouru une distance repérée par l'angle $\Delta\varnothing$. A l'instant $t_d$ le vecteur poussée P est situé sur un axe $oy_1$, faisant avec l'axe $oy_0$ d'un plan de référence ($oy_0$, $oz_0$) un angle $\Delta\varnothing/2$. La poussée moyenne Pm est orientée suivant la direction $oy_0$.

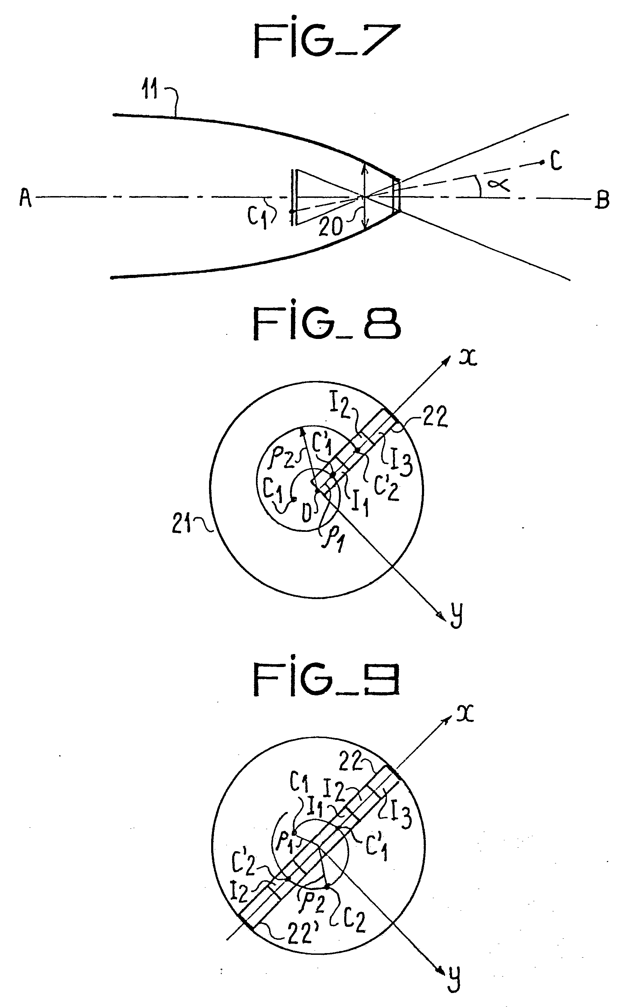

Les figures 4, 5 et 6 sont des schémas explicatifs montrant l'évolution, en position, dans le temps, des impulseurs a, b, c ... n. Sur la figure 4 l'impulseur (a) orienté selon l'axe $oy_1$ du plan ($oy_1$, $oz_1$) est mis à feu lorsque l'angle que fait $oy_1$ avec l'axe $oy_0$ du plan de référence ($oy_0$, $oz_0$) lié à la cible est égale à θ = $\Delta\varnothing/2$. $\Delta\varnothing$ est l'angle que parcourt l'impulseur (a) entraîné dans le mouvement de rotation du projectile à la vitesse ω de rotation de celui-ci pendant la durée de sa combustion. La vitesse en roulis ω du projectile est supposée constante durant la phase finale de correction. La direction de la poussée moyenne Pm se confond alors avec l'axe $oy_0$. Sur la figure 5 la combustion de l'impulseur (a) est terminée, son axe $oy_1$ fait alors avec l'axe de référence absolue $oy_0$ un angle négatif θ égal à $\Delta\varnothing/2$. Conformément à l'invention, dès que l'axe $oy_2$ de l'impulseur suivant (b) fait un angle θ = $\Delta\varnothing/2$, sa combustion démarre. Il tourne à la vitesse ω avec le projectile et sa combustion se termine lorsque son axe $oy_2$ fait avec l'axe de référence absolu $oy_0$ un angle négatif θ = $\Delta\varnothing/2$. Enseuite comme le montre la figure 6 dès que l'axe $oy_3$ de l'impulseur suivant (c) fait avec l'axe $oy_0$ un anlge θ = $\Delta\varnothing/2$, sa combustion est déclenchée. A la fin de celle-ci l'angle que fait son axe $oy_3$ avec l'axe $oy_0$ est égal à un angle négatif θ = $\Delta\varnothing/2$ et le processus décrit précédemment se répète. Il se répète aussi d'ailleurs pour chacun des impulseurs du barillet. Les temps de combustion sont calculés pour que tous les impulseurs soient brûlés durant une rotation complète du projectile sur lui-même.

On décharge ainsi le barillet en sorte que toutes les poussées élémentaires de chaque impulseur se superposent. On dispose donc durant toute la phase de correction d'une force moyenne opposée à la poussée moyenne Pm centrée sur une direction déterminée par l'angle $\Delta\varnothing/2$. Cette force est égale à la somme des forces moyennes correspondant à chaque poussée élémentaire intégrée sur l'angle $\Delta\varnothing$.

Ce procédé est particulièrement intéressant lorsqu'une seule correction en fin de trajectoire est recherchée. Il suppose l'acquisition de données permettant de déterminer le seuil à partir duquel la correction doit être déclenchée et notamment la mesure de l'angle de rotation en roulis du projectile. Différents procédés peuvent être utilisés pour l'acquisition de ces données. On peut, par exemple, procéder à ces mesures à partir d'observations faites au sol : réception d'une balise émettrice emportée par le projectile et poursuite de la cible par exemple. On peut aussi effectuer la mesure du roulis au niveau du projectile lui-même grâce à des moyens d'émission de faisceaux laser situés au sol. Dans les deux cas l'ordre de mise à feu est envoyé du sol.

Mais il existe un autre procédé préféré aux précédents et qui est maintenant décrit au moyen des figures 7, 8 et 9. Il coopère très efficacement avec le système pyrotechnique de correction conformément à l'invention. Il s'agit de moyens de mesure liés au projectile lui-même. La référence de roulis est recherchée par observation de la cible elle-même et obtenue grâce à un autodirecteur placé dans l'ogive du projectile. C'est une mesure plus directe : chaque fois que l'autodirecteur passe devant la cible il détermine l'angle sous lequel le projectile voit la cible. Le nez de l'ogive est équipé pour cela d'un système optique de détection infrarouge lié au dispositif de commande du déclenchement de la combustion des impulseurs. L'objectif infrarouge référencé 20 coopère avec au moins une barrette 22, portée par un suppport 21. Une telle barrette 22 peut être constituée par une pluralité de cellules élémentaires montées l'une sur l'autre. Sur la figure 8 pour faciliter la compréhension du procédé on n'a seulement représenté trois cellules élémentaires $l_1$, $l_2$, $l_3$ s'étageant du centre du support 21 jusqu'à la périphérie. Ce nombre peut être beaucoup plus élevé. (On a donc (x) cellules repérées par un indice $l_1$, $l_2 ... l_x$). Quand la cible C est dans le champ du système optique de détection, l'image de la cible $C_1$ tombe sur le support et à un instant donné impressionne la barrette 22 en un point $C'_1$. La cellule impressionnée par l'image de la cible $C'_1$ est située à la distance $\rho_1$ du centre du support lui-même confondu avec l'axe du projectile qui dépend de l'angle $\alpha$ que fait l'axe optique $CC'_1$ (cible-image de la cible) avec l'axe AB du projectile. Chaque fois que le point image passe sur la barrette il impressionne l'une des cellules élémentaires. Par exemple si lors d'un tour, le point image $C'_1$ impressionne la cellule élémentaire $l_1$ de la barrette 22 la distance de ce point image $C'_1$ à l'axe du projectile (passant par le point 0) est proportionnel à l'angle $\alpha$, cette distance est référence $\rho_1$. Lors du tour suivant, le point image peut encore impressionner la cellule élémentaire $l_1$ ou comme cela est illustré sur la figure 8, une cellule élémentaire voisine $l_2$. Dans ce cas la distance du point image $C'_2$ à l'axe du projectile est égale à $\rho_2$. Le procédé consiste à mettre en mémoire sur un tour la mesure de $\rho_1$ et de la comparer avec la mesure $\rho_2$ faite au tour suivant. Lorsque l'angle $\alpha$ évolue rapidement à chaque tour du projectile c'est une cellule différente de la barrette qui est impressionnée par l'image de la cible comme cela vient d'être expliqué au moyen de la figure 8.

Le procédé consiste alors à choisir un nombre de cellules telles qu'entre deux cellules successives on ait la relation :

$$d\omega_0/dt = (\rho_2 - \rho_1)/T = S_1 = \text{seuil de déclenchement dans laquelle :}$$

$d\omega_0/dt$ est la vitesse instantanée de rotation de la ligne de visée,

T le résultat du comptage de l'horloge entre deux tours du calculateur appartenant à l'autodirecteur,

$\rho_1$ représente l'écart entre l'image de la cible $C'_1$ qui impressionne la cellule $l_1$ de la barrette 22 et l'axe du projectile au cours du premier tour,

$\rho_2$ représente l'écart entre l'image de la cible $C'_2$ qui impressionne la cellule $l_2$ de cette même barrette 22 et l'axe du projectile au cours du tour suivant.

Si entre deux tours du projectile, l'image $C_1$ de la cible impressionne deux cellules différentes, le seuil de déclenchement $S_1$ est atteint et la combustion du premier impulseur est déclenché. Compte tenu de la mesure de $\tau$ (comptage de l'horloge du calculateur) donc de la vitesse en roulis du projectile sur cette portion de trajectoire et de l'instant de passage du système de détection sur la cible on calcule le retard nécessaire pour l'allumage de l'impulseur concerné. Ensuite si l'angle que font entre elles les tuyères d'un impulseur avec celle du suivant est $\varphi_{(ab)}$ il faut que :

$$(d\omega/dt) \cdot t_r = \varphi_{(ab)}$$

d'où la mesure du temps de retard $t_r$ de déclenchement du propulseur suivant par rapport au propulseur précédent.

Dans l'exemple décrit une seule barrette de cellules infrarouge était utilisée mais dans le but d'augmenter la cadence d'information, plusieurs barrettes peuvent être mises en œuvre comme le montre la figure 9. Dans l'exemple maintenant décrit on a représenté seulement deux barrettes 22 et 22' mais on pourrait ainsi multiplier le nombre de barrettes. Chacune de ces barrettes comprend un certain nombre de cellules élémentaires $l_1$, $l_2 ... l_x$. Lors d'un premier tour du projectile une première cellule d'un rang déterminé d'une barrette également donnée est impressionnée. Lors du tour suivant soit la même cellule de la même barrette est impressionnée ; soit une cellule de rang différent de la même barrette, soit enfin une cellule de rang différent d'une autre barrette par exemple la cellule $l_2$ de la barrette 22'. A partir des signaux émis correspondant on détermine le seuil de déclenchement $S_1$ défini précédemment.

L'invention s'applique plus particulièrement aux obus d'artillerie antiaérienne, aux projectiles utilisés dans les tirs antiblindés ainsi qu'aux sous projectiles utilisés en artillerie sol-sol.

## Revendications

1. Procédé de pilotage et de guidage d'un projectile en phase terminale vers une cible, ce projectile (1) en autorotation comportant un barillet (2) de n impulseurs (3) munis de tuyères latérales (4) également espacées en couronne à la périphérie du corps (7) et un autodirecteur muni d'un senseur optique (12) situé dans l'ogive (11), procédé caractérisé en ce que le projectile ayant été tiré en direction du point futur de collision avec la cible, il comprend les opérations suivantes :

a) mesure de la période d'autorotation T du projectile autour de son axe longitudinal (A-B) ;

b) détection de la direction de l'image optique (Ci) de la cible (C) lors des rotations successives du projectile ;

c) mesure de la coordonnée polaire ($\rho_i$) de cette image optique (Ci) de la cible, au moins une fois durant la période de rotation du projectile ;

d) calcul de la grandeur de la vitesse de variation ($\rho_1 - \rho_2$)/T des mesures successives des coordonnées polaires au cours d'une période de temps T, cette grandeur représentant la vitesse instantanée de rotation de la ligne de visée ;

e) comparaison de cette grandeur calculée à une valeur de seuil $S_1$ ;

f) mesure de l'instant $t_d$ auquel la grandeur calculée dépasse cette valeur de seuil pour fournir un signal d'ignition des barillets d'impulseurs ;

g) et, ignition du premier impulseur, puis séquentiellement du second, troisième et finalement des $n^{ième}$ impulseurs, en rotation avec la période d'autorotation du projectile afin de décharger totalement le barillet d'impulseurs au cours d'une seule rotation du projectile.

2. Procédé selon la revendication 1 caractérisé en ce que l'image optique (Ci) de la cible est projetée sur un support plan (21) comportant une barrette (22) de cellules photodétectrices (I) contiguës qui sont rangées radialement depuis l'axe longitudinal (A-B) jusqu'à la périphérie du projectile, tel que la cellule photodétectrice impressionnée par l'image optique (Ci) corresponde à l'angle ($\alpha$) entre l'axe longitudinal (A-B) du projectile et la direction $\alpha$ de la cible.

3. Procédé selon la revendication 2, caractérisé en ce que les cellules photodétectrices (I) sont agencées, l'une par rapport à l'autre, de telle sorte que lorsque la grandeur de la vitesse angulaire de déplacement de la droite projectile-cible atteint une valeur de seuil $S_1$, dit de déclenchement, l'image optique de la cible impressionne deux cellules photodétectrices différentes ($l_i$ et $l_j$) entre une rotation du projectile et la rotation suivante.

4. Procédé selon la revendication 3, caractérisé en ce que le support plan (21), sur lequel l'image de la cible est projetée, comporte plusieurs barrettes (22 et 22') qui sont décalées angulairement de sorte que les cellules photodétectrices (I) impressionnées de rangs différents, appartenant à deux barrettes successives satisfassent au critère de dépassement de la valeur de seuil $S_1$.

### Claims

1. Method of directing and guiding a projectile in the terminal phase towards a target, this projectile (1) having an autorotation and comprising a barrel of n thrust engines (3) provided with lateral nozzles (4) equally spaced and forming a ring about the periphery of the body (7), and a homing system provided with an optical sensor (12) located in the head (11), the method being characterized in that, the projectile having been shot into the direction of the future impact point with the target, it comprises the following operations :

a) measurement of the autorotation period (T) of the projectile about its longitudinal axis (A-B) ;

b) detection of the direction of the optical image (Ci) of the target (C) during successive rotations of the projectile ;

c) measurement of the polar coordinate ($\rho_i$) of this optical image (Ci) of the target at least once during the rotation period of the projectile ;

d) computation of the value of the variation speed ($\rho_1 - \rho_2$)/T of the successive measured values of the polar coordinates during a time period T, this value representing the momentary rotational speed of the aiming line ;

e) comparison of this computed value with a threshold value $S_1$ ;

f) measurement of the moment $t_d$ at which the computed value exceeds this threshold value to provide an ignition signal to the thrust engine barrels ;

g) and ignition of the first thrust engine and then sequentially of the second, third and finally of the nth thrust engines rotating with the autorotation period of the projectile in order to completely discharge the barrel of thrust engines in the course of a single rotation of the projectile.

2. Method according to claim 1, characterized in that the optical image (Ci) of the target is projected onto a plane carrier (21) comprising an array (22) of adjacent photodetector cells (I) radially arranged from the longitudinal axis (A-B) to the periphery of the projectile in such a manner that the photodetector cell hit by the optical image (Ci) corresponds to the angle ($\alpha$) between the longitidunal axis (A-B) of the projectile and the direction $\alpha$ of the target.

3. Method according to claim 2, characterized in that the photodetector cells (I) are arranged one with respect to the other in such a manner that, when the value of the angular moving speed of the straight line between the projectile and the target reaches a threshold value $S_1$, referred to as triggering value, the optical image of the target hits two different photodetector cells ($l_i$ and $l_j$) between one rotation of the projectile and the following rotation.

4. Method according to claim 3, characterized in that the plane carrier (21) onto which the image of the target is projected comprises a plurality of arrays (22 and 22') which are angularly shifted in such a manner that the hit photodetector cells (I) of different orders and belonging to two successive arrays satisfy the criterion of exceeding the threshold value $S_1$.

### Ansprüche

1. Verfahren zur in der Endphase erfolgenden Lenkung und Leitung eines Projektils gegen ein Ziel, wobei dieses in Eigendrehung befindliche Projektil (1) eine Trommel (2) aus n Schuberzeugern (3) umfaßt, die mit seitlichen Austrittsrohren (4) versehen sind, welche kranzförmig und gleichmäßig am Umfang des Körpers (7) beabstandet sind, und eine Zielsucheinrichtung umfaßt, die mit einem im Kopf (11) angeordneten optischen Sensor (12) versehen ist, wobei das Verfahren dadurch gekennzeichnet ist, daß es nach dem Abfeuern des Projektils in Richtung des zukünftigen Kollisionspunktes mit dem Ziel folgende Schritte umfaßt :

a) Messung der Eigendrehungsperiode (T) des Projektils um seine Längsachse (A-B) ;

b) Detektion der Richtung des optischen Bildes (Ci) des Zieles (C) während der aufeinanderfolgenden Umdrehungen des Projektils ;

c) Messung der Polarkoordinate ($\rho_i$) dieses optischen Bildes (Ci) des Zieles wenigstens einmal während der Umdrehungsperiode des Projektils ;

d) Berechnung der Größe der Änderungsgeschwindigkeit ($\rho_1 - \rho_2/T$) der aufeinanderfolgenden Messungen der Polarkoordinaten im Verlaufe einer Zeitperiode T, wobei diese Größe die augenblickliche Rotationsgeschwindigkeit der Ziellinie darstellt ;

e) Vergleichen dieses berechneten Wertes mit einem Schwellwert $S_1$ ;

f) Messung des Zeitpunktes $t_d$, zu welchem die berechnete Größe diesen Schwellwert überschreitet, um ein Signal zum Zünden der Schuberzeugertrommeln zu erzeugen ;

g) und Zündung des ersten Schuberzeugers sowie anschließend des zweiten, dritten und schließlich des nten Schuberzeugers, die mit der Eigendrehungsperiode des Projektils rotieren, um die Trommel von Schuberzeugern im Verlauf einer einzigen Umdrehung des Projektils vollständig zu entleeren.

2. Verfahren nach Anspruch 1, dadurch gekennzeichnet, daß das optische bild (Ci) des Zieles auf einen ebenen Träger (21) projiziert wird, der eine Reihenanordnung (22) von Fotodetektorzellen (I) umfaßt, welche aneinander angrenzend in Radialrichtung von der Längsachse (A-B) ausgehend bis zum Umfang des Projektils derart angeordnet sind, daß die durch das optische Bild (Ci) beaufschlagte Fotodetektorzelle dem Winkel ($\alpha$) zwischen der Längsachse (A, B) des Projektils und der Richtung $\alpha$ des Ziels entspricht.

3. Verfahren nach Anspruch 2, dadurch gekennzeichnet, daß die Fotodetektorzellen (I) eine in bezug auf die andere derart angeordnet sind, daß das optische Bild des Ziels, wenn die Größe der Winkelgeschwindigkeit der Bewegung der Geraden zwischen Projektil und Ziel einen als Auslösewert bezeichneten Schwellwert $S_1$ erreicht, zwischen einer Umdrehung des Projektils und der darauffolgenden Umdrehung zwei verschiedene Fotodetektorzellen (Ii und Ij) beaufschlagt.

4. Verfahren nach Anspruch 3, dadurch gekennzeichnet, daß der ebene Träger (21), auf den das Bild des Zieles projiziert wird, mehrere Reihenanordnungen (22 und 22') umfaßt, die derart winkelverschoben sind, daß die beaufschlagten Fotodetektorzellen (I) verschiedener Ordnungszahlen, die zu zwei aufeinanderfolgenden Reihenanordnungen gehören, das Kriterium des Überschreitens des Schwellwerts $S_1$ erfüllen.

FIG_1

FIG_2

FIG_3

FIG_4

FIG_5

FIG_6

FIG_7

FIG_8

FIG_9